# EUROPEAN PATENT SPECIFICATION

(11) **EP 3 541 176 B1**
(45) Date of publication and mention of the grant of the patent: **10.05.2023**
(21) Application number: 17851941.9
(22) Date of filing: 21.12.2017
(51) Int. Cl.: A01K 63/04, C01B 32/50, A01G 7/02

(54) **CARBON DIOXIDE GENERATOR**
KOHLENDIOXID-GENERATOR
GÉNÉRATEUR DE DIOXYDE DE CARBONE

(30) Priority: 21.12.2016 KR 20160175308; 18.04.2017 KR 20170049901
(43) Date of publication of application: 25.09.2019
(73) Proprietor: Kim, Bo Kyeong, Hwaseong-si, Gyeonggi-do 18480 (KR)
(72) Inventor: Kim, Bo Kyeong, Hwaseong-si, Gyeonggi-do 18480 (KR)
(74) Representative: dompatent von Kreisler Selting Werner - Partnerschaft von Patent- und Rechtsanwälten mbB
(86) International application number: PCT/KR2017/015201
(87) International publication number: WO 2018/117669

(56) References cited:
- EP-A1- 0 844 197
- CN-Y- 2 346 174
- CN-Y- 2 386 038
- CN-Y- 2 386 038
- CN-Y- 201 250 107
- JP-A- 2015 216 877
- KR-Y1- 200 461 445

## Description

### Technical Field

One or more embodiments relate to a carbon dioxide generator that produces a carbon dioxide using neutralization reaction between an acid and a base containing a salt of carbonic acid.

### Background Art

Carbon dioxide (CO2) is used for various purposes, for example, as a raw material for chemical products or food additives, for carbonated beverage manufacturing, wine manufacturing, and airbags, or as a nutrient for photosynthesis of plants including aquatic plants.

Examples of known methods of generating carbon dioxide include combustion, fermentation, and a neutralization reaction between carbonates and acids. Devices using fermentation reactions and neutralization reactions are the most widely applied in real life as simple compact devices, such as aquarium equipment and attractant generators for mosquito control.

First, devices for generating carbon dioxide (CO2) by a fermentation reaction mainly incubate yeast with glucose (or saccharides) to produce CO2. However, due to the characteristics of a fermentation reaction, an initial driving time is needed, and it may be difficult to stop prodcution or to control production rates. Moreover, there is the possibility that ethanol, which is a by-product, may be contaminated in the carbon dioxide gas. At lower temperatures such as in winter, the production rate may be significantly low.

Second, devices for generating and supplying carbon dioxide (CO2) by neutralization reactions mainly use a method in which a citric acid solution and sodium bicarbonate are respectively put into bottle A and bottle B and arranged in parallel. In detail, bottle A and bottle B are connected to each other using a small plastic hose, and a force is applied to bottle A so as to transfer the solution of bottle A into bottle B, thereby conducting initial driving. Then, in bottle B, a neutralization reaction occurs instantly to generate carbon dioxide (CO2), and the generated carbon dioxide (CO2) is discharged naturally through another hose installed in bottle B. In addition, the discharged carbon dioxide gas continuously draws the solution of bottle A so as to continuously generate and supply carbon dioxide.

Devices using a similar neutralization reaction are known for example from CN 2 386 038 Y and CN 2 346 174 Y.

The above device does not require an initial driving time, which is a problem in fermentation apparatuses, is hardly affected by temperature, and is capable of generating carbon dioxide of high purity. However, installation and initial operation of the device may be difficult. It is difficult to control production rates of carbon dioxide, and pressure inside bottle B may be increased excessively due to an excessive amount of carbon dioxide being generated in bottle B. An excessive increase in internal pressure of bottle B may cause an explosion of the device. This is a very big problem of these kinds of generators.

Accordingly, there is a demand for development of a new technique or apparatus for addressing problems such as the difficulty in controlling production rates of carbon dioxide (CO2) generated in a chemical carbon dioxide generator and a biological carbon dioxide generator according to the conventional art in the corresponding field, as well as problems regarding temperature variation, installation difficulty, and an excessive increase in pressure.

### Disclosure of Invention

### Solution to Problem

One or more embodiments include a carbon dioxide generator for generating carbon dioxide (CO2) by a neutralization reaction between an acid and a base containing a salt of carbonic acid, wherein the carbon dioxide generator is capable of controlling production rates of carbon dioxide or stopping generation of carbon dioxide.

One or more embodiments include a carbon dioxide generator capable of preventing an excessive increase in pressure.

One or more embodiments include a carbon dioxide generator that is easy to use.

One or more embodiments include a carbon dioxide generator that may be repeatedly used by refilling raw materials.

The objects of the present invention are not limited to the above-mentioned objects, and other objects not mentioned can be clearly understood by those skilled in the art from the following description.

The aim is achieved by means of the characteristics of independent claim 1.

### Brief Description of Drawings

These and/or other aspects will become apparent and more readily appreciated from the following description of the embodiments, taken in conjunction with the accompanying drawings in which:
FIG. 1 is a perspective view illustrating an integrated-type carbon dioxide generator according to an embodiment of the present invention;
FIG. 2 is a front view of the integrated-type carbon dioxide generator of FIG. 1;
FIG. 3 is a plan view of the integrated-type carbon dioxide generator of FIG. 1;
FIG. 4 is a cross-sectional view of the integrated-type carbon dioxide generator of FIG. 1; and
FIGS. 5 and 6 are views showing an exploded state of the integrated-type carbon dioxide generator.

### Best Mode for Carrying out the Invention

According to one or more embodiments, an integrated-type carbon dioxide generator includes an upper container accommodating an acid or aqueous solution thereof and including an outlet pipe through which carbon dioxide gas is discharged; a lower container located under the upper container and accommodating a base containing a salt of carbonic acid or aqueous solution thereof; a dropping hole area formed in a bottom surface of the upper container such that the acid or aqueous solution thereof is supplied from the upper container to the lower container by gravity; a speed control valve that is externally manipulable and configured to open and close the dropping hole area; and a pressure equilibrium and gas passage pipe configured to form a path through which carbon dioxide generated in the lower container is transferred to the upper container.

Further, the integrated-type carbon dioxide generator includes an upper inlet part formed in an upper portion of the upper container and configured to be openable and to input the acid or the aqueous solution thereof into the upper container.

Further, a sealing material preventing gas leakage is interposed between the upper portion and the upper inlet part.

Further, the outlet pipe is formed in the upper inlet part.

Further, the speed control valve includes a head portion, a body extending from the head portion toward bottom of the upper container, and a lower end tip via which the dropping hole area is opened or closed, and a speed at which the acid or the aqueous solution thereof is input to the lower container is adjusted or input of the acid or the aqueous solution thereof is stopped by manipulating the speed control valve.

Further, a thread groove, along which an external screw thread of a through hole moves, is formed in an inner portion of the head portion of the speed control valve, wherein the through hole upwardly protrudes in an upper portion of the upper container.

Further, a sealing material preventing leakage of a gas is interposed between the body and the upper portion of the upper container.

Further, one end of a bottom surface of the pressure equilibrium and gas passage pipe in a vertical direction is formed in an upper area of the lower container such that only carbon dioxide and gases are able to move through the pressure equilibrium and gas passage pipe, and another end of an upper surface of the pressure equilibrium and gas passage pipe is located in an upper area of the upper container so as to form a vertical-type passage in which the upper container and the lower container are connected to each other.

Further, the upper container and the lower container are separately coupled.

Further, when the upper container is separated from the lower container, an upper portion of the lower container is opened.

### Mode for the Invention

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

In the description of the present invention, the detailed description of known techniques which might unnecessarily obscure the subject matter of the present invention will be omitted.

An integrated-type carbon dioxide generator 100 according to an embodiment of the present invention may be provided as an inter-detachable module or a single system, and is provided to generate carbon dioxide (CO2), which is essential for a compact water tank for ornamental aquatic plants or a water tank including aquatic plants, in a simple, safe, and efficient manner.

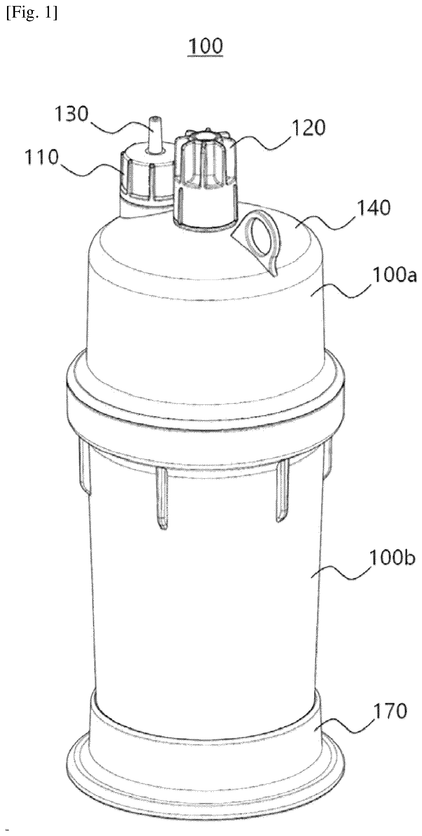

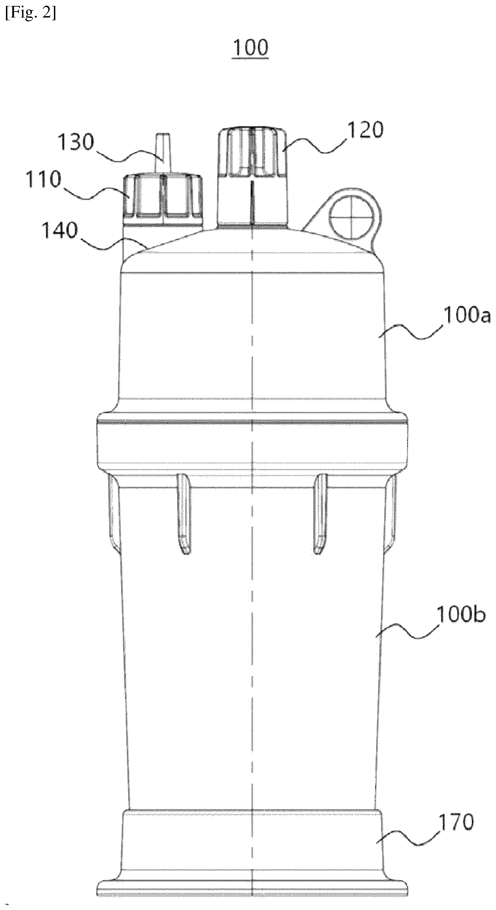

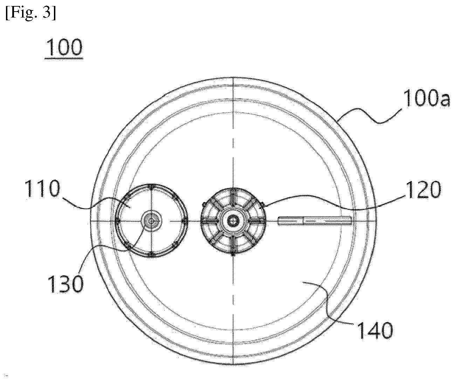

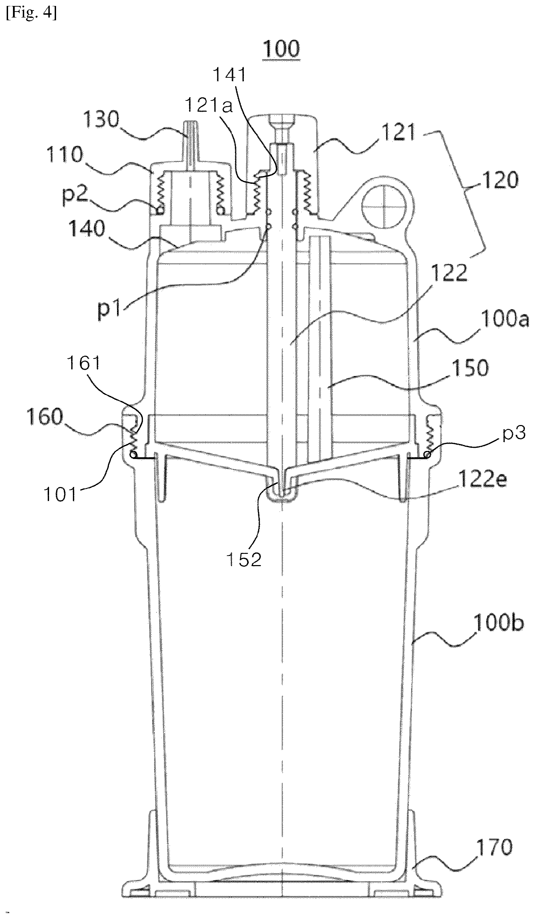

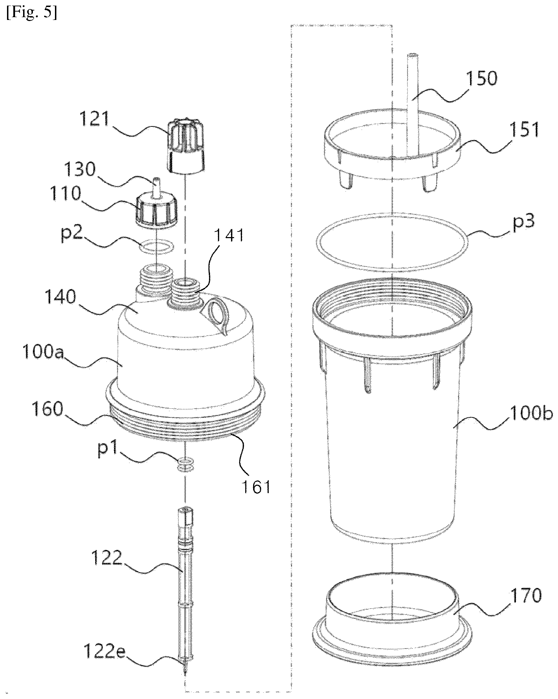

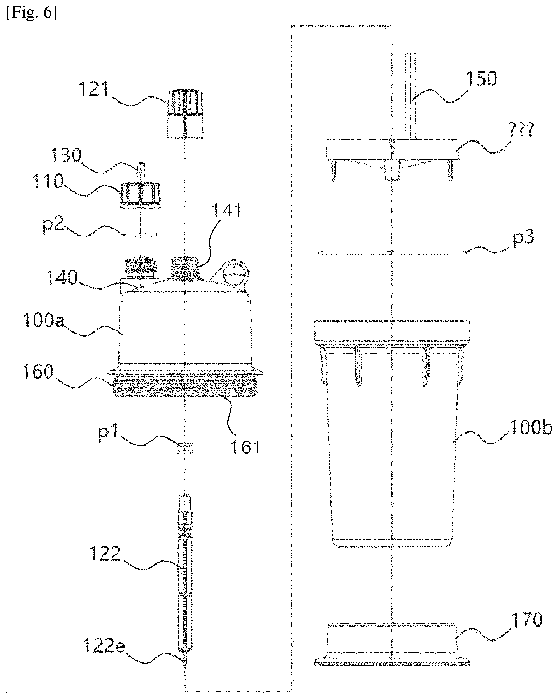

FIG. 1 is a perspective view illustrating the integrated-type carbon dioxide generator 100 according to an embodiment of the present invention. FIG. 2 is a front view of the integrated-type carbon dioxide generator 100 of FIG. 1. FIG. 3 is a plan view of the integrated-type carbon dioxide generator 100 of FIG. 1. FIG. 4 is a cross-sectional view of the integrated-type carbon dioxide generator 100 of FIG. 1. FIGS. 5 and 6 are views showing an exploded state of the integrated-type carbon dioxide generator 100.

Referring to FIGS. 1 through 6, the integrated-type carbon dioxide generator 100 includes an upper container 100a and a lower container 100b. The upper container 100a and the lower container 100b are communicatively connected to each other through a dropping hole area 152. In the upper container 100a, an upper inlet part 110, a speed controlling part 120, a carbon dioxide outlet pipe 130, and a pressure equilibrium and gas passage pipe 150, and an opening and closing part 160 are formed, and in the lower container 100b, a stand 170 is formed. The upper container 100a contains an acid or aqueous solution thereof. The lower container 100b contains a base containing a salt of carbonic acid or aqueous solution thereof.

The upper inlet part 110 is openably formed on the upper portion 140 of the upper container 100a in order to inject the acid or the aqueous solution thereof into the upper container 100a. The upper inlet part 110 may be implemented as a bottle cap. For example, the upper inlet part 110 may be in a form of a rotating and openable lid formed on the upper portion 140. A sealing material p2 preventing leakage of a gas may be interposed between the upper portion 140 and the upper inlet part 110. The sealing material p2 may be, for example, a sealing rubber.

The speed control valve 120 opens or closes the dropping hole area 152. The speed control valve 120 may adjust a degree of opening the dropping hole area 152. The speed control valve 120 may be externally manipulated. The speed control valve 120 may be, for example, in a needle valve form. For example, the speed control valve 120 may be implemented as a assembly unit and may include a head part 121 and a body part 122 extending from the head part 121. The speed control valve 120 is used to adjust a speed at which a solution injected through the upper inlet part 110 and located in the upper container 100a drains to the lower container 100b or to stop the flow of the solution. The speed control valve 120 may be, for example, in a needle shape, and the head part 121 thereof may be cylindrical. An external screw thread 141 may be provided in a through hole which upwardly protrudes in the upper portion 140 of the upper container 100a, Further, a thread groove 121a, which mates with the external screw thread 141, is formed in an inner portion of the head portion of the speed control valve 120 to allow the speed control valve 120 to be raised and lowered. A sealing material p1 preventing leakage of a gas may be interposed between the body part 122 and the upper portion 140 of the upper container 100a. The sealing material p1 may be, for example, a sealing rubber.

Meanwhile, a lower end tip 122e of the body part 122 formed under the head part 121 of the speed control valve 120 may protrude from a bottom surface of the upper container 100a, thereby performing a function of opening or closing the dropping hole area 152 toward the lower container 100b.

Accordingly, by externally manipulating the speed control valve 120 to rotate the same, the speed control valve 120 may be raised or lowered, and the dropping hole area 152 may be opened or closed, and a degree of opening the dropping hole area 152 may be adjusted.

Here, the upper inlet part 110 and the carbon dioxide outlet pipe 130 are formed eccentrically from the speed control valve 120 formed in a center of the upper portion 140. While the carbon dioxide outlet pipe 130 is illustrated as passing through the upper inlet part 110, the carbon dioxide outlet pipe 130 may also be formed to pass through an upper surface of the upper container 100a, independently of the upper inlet part 110, or may be included as an additional cap.

The pressure equilibrium and gas passage pipe 150 is a path for carbon dioxide (CO2) generated in the lower container 100b, to the upper container 100a, and corresponds to a pressure equilibrium path of the upper container 100a and the lower container 100b, and one end thereof in a vertical direction is formed in an upper area of the lower container 100b, and the other end thereof is formed in an upper area of the upper container 100a, thereby forming a vertical type passage shape in which the upper container 100a and the lower container 100b are connected to each other.

As illustrated in FIGS. 1 through 6, the pressure equilibrium and gas passage pipe 150 may be formed on an additional base 151 that is separated from the upper container 100a or the lower container 100b, or may be alternatively integrally formed with the bottom surface of the upper container 100a.

In addition, the pressure equilibrium and gas passage pipe 150 may be disposed in a center adjacent to a location of the lower end tip 122e of the body part 122 of the speed control valve 120 on the bottom surface of the upper container 100a as illustrated in the drawing, or may be located at an edge according to another embodiment.

In addition, undesired leakage of the acid or the aqueous solution thereof in the upper portion to the lower container 100b may be prevented by precisely inserting the additional base 151 into a lower portion of the upper container 100a or using various bonding and welding methods.

The opening and closing part 160 separably couples the upper container 100a and the lower container 100b. The opening and closing part 160 may be implemented by a joining structure. The opening and closing part 160 provides a function of opening an upper portion of the lower container 100b so as to input a raw material into the lower container 100b. For example, the opening and closing part 160 may be in a form of a screw thread 161 that is formed on an outer lower end portion of the upper container 100a and engages with a symmetrical screw thread 101 formed in an inner upper portion of the lower container 100b. According to this configuration, the upper container 100a may be separated from the lower container 100b by rotating the upper container 100a in one direction. Here, a raw material, for example, a base containing a salt of carbonic acid may be input to the lower container 100b through the opened upper portion of the lower container 100b. Next, by rotating the upper container 100a in an opposite direction, the upper container 100a may be coupled to the lower container 100b. A sealing material p3 preventing leakage of a gas may be provided in the opening and closing part 160. The sealing material p3 may be interposed, for example, between the upper container 100a and the lower container 100b. The sealing material 100b may be, for example, a sealing rubber.

The stand 170 is a plate-shaped bottom surface of the lower container 100b, and is an element added in the lower portion so as to prevent the integrated-type carbon dioxide generator 100 from falling.

A carbon dioxide generating function performed using the integrated-type carbon dioxide generator 100 having the above-described elements will be described below.

After inputting an acid or aqueous solution thereof into the upper container 100a and a base containing a salt of carbonic acid or aqueous solution thereof into the lower container 100b, the bottom surface of the upper container 100a, for example, the dropping hole area 152 formed in the base 151, is opened by using the speed control valve 120 of a needle valve type. For example, the dropping hole area 152 may be opened by rotating the speed control valve 120 in an upward direction. A degree of opening the dropping hole area 152 may be adjusted based on a degree of rotation of the speed control valve 120. By gravity, the acid or the aqueous solution thereof in the upper container 100a naturally falls into the lower container 100b by passing through the dropping hole area 152. As neutralization reaction between the acid or the aqueous solution thereof, and the base containing a salt of carbonic acid or aqueous solution thereof takes places in the lower container 100b, carbon dioxide (CO2) gas is generated. The carbon dioxide gas passes through a passage pipe formed in the pressure equilibrium and gas passage pipe 150 to move into the upper container 100a, and is discharged to the outside through the carbon dioxide outlet pipe 130. A pressure equilibrium is created between the upper container 100a and the lower container 100b through the pressure equilibrium and gas passage pipe 150, and as the upper container 100a is communicatively connected to the outside through the carbon dioxide outlet pipe 130, an excessive increase in a pressure in the lower container 100b may be prevented. Accordingly, explosion due to the excessive increase in pressure may be prevented. The acid or aqueous solution thereof may be naturally supplied from the upper container 100a to the lower container 100b by gravity. By adjusting a degree of opening the dropping hole area 152 through the speed control valve 120, an amount of the acid or aqueous solution thereof to be dropped into the lower container 100b may be adjusted or inputting thereof may be stopped, thereby adjusting an amount of carbon dioxide to be generated. Accordingly, explosion due to the excessive increase in pressure may be prevented.

The integrated-type carbon dioxide generator 100 according to the present embodiment is operated based on the same chemical principle as a typical chemical carbon dioxide apparatus for generating carbon dioxide through neutralization reaction between an acid and a base containing a salt of carbonic acid.

However, unlike typical apparatuses, the integrated-type carbon dioxide generator 100 according to the present embodiment is simply constructed as a single integrated-type in which the upper container 100a and the lower container 100b are separately coupled to each other, and is advantageous in that there is a possibility of adjusting a speed of a neutralization reaction or stopping the neutralization reaction.

As described above, despite being constructed as a single integrated-type, the integrated-type carbon dioxide generator 100 according to the present embodiment may be operated safely and easily based on gravity and a pneumatic principle by using the pressure equilibrium and gas passage pipe 150.

That is, after inputting an acid or aqueous solution thereof into the upper container 100a, and inputting a base containing a salt of carbonic acid or aqueous solution thereof into the lower container 100b, then by coupling the upper container 100a and the lower container 100b by tightening the opening and closing part 160, a pneumatic pressure in the upper container 100a and the lower container 100b reaches equilibrium through the pressure equilibrium and gas passage pipe 150 which is a passage from the bottom surface of the upper container 100a to a location near an upper surface of the upper container 100a in an upward direction orthogonal to the bottom surface of the upper container 100a.

Accordingly, when the dropping hole area 152 is opened through the speed control valve 120, naturally by gravity, the acid or aqueous solution thereof in the upper container 100a may be dropped into the lower container 100b at a constant speed. In addition, as the speed control valve 120 having a protruding shape formed in a center portion of the upper portion 140 of the upper container 100a may be minutely adjusted to be opened or closed, from the outside, a user may easily adjust a flow to a desired amount to thereby generate carbon dioxide (CO2) at a desired dropping speed.

As a result, users may instantly generate a desired amount of carbon dioxide (CO2) or stop generation of the carbon dioxide by using the integrated-type carbon dioxide generator 100, which is a simple single device.

In addition, according to the integrated-type carbon dioxide generator 100 of the present embodiment, the upper container 100a and the lower container 100b may be separably coupled to each other via the opening and closing part 160. Thus, when generation of carbon dioxide (CO2) stops due to exhaustion of a provided amount of an acid and a base containing a salt of carbonic acid, the integrated-type carbon dioxide generator 100 may be repeatedly used by replacing the upper container 100a and/or the lower container 100b with new ones or refilling an acid and/or a base containing a salt of carbonic acid in the upper container 100a and/or the lower container 100b.

In addition, examples of the acid to be input to the upper container 100a may be sulfuric acid, hydrochloric acid, bromic acid, acetic acid, citric acid or mixture of at least two of these acids. For example, citric acid, which is readily accessible to the public and safely distributable as a solid, and is a weak acid, may be suitable. The salt of carbonic acid may be carbonate or bicarbonate. Examples of the base containing the salt of carbonic acid to be input to the lower container 100b are sodium carbonate, sodium bicarbonate, potassium carbonate, potassium bicarbonate, calcium carbonate and mixture of at least two of these materials. For example, sodium bicarbonate (baking soda), which is readily accessible to the public and safely distributed and the cheapest, may be preferable.

In sum, the integrated-type carbon dioxide generator 100 according to the present invention is an innovative, safe, and novel carbon dioxide generating system in that it is capable of generating high-purity carbon dioxide (CO2) at a desired speed and in a desired amount at low costs by using citric acid and sodium bicarbonate, which are readily available.

Meanwhile, the neutralization reaction between citric acid and baking soda is shown in Formula 1.

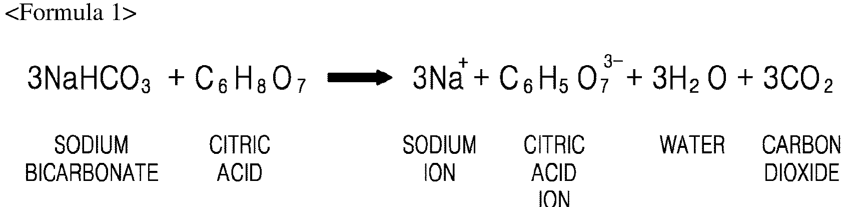

As the acid or the aqueous solution thereof in the upper container 100a is introduced into the base containing a salt of carbonic acid oraqueous solution thereof in the lower container 100b, a ratio of an internal volume of the upper container 100a to an internal volume of the lower container 100b may preferably be 1.0:1.0 to 3.5.

Although not shown in the drawing, a pressure releasing device that opens by itself if an internal pressure exceeds an allowable value may be installed in the upper portion 140 of the upper container 100a.

Also, although not shown in the drawing, a pressure gauge capable of checking an internal pressure of the container 100 may be installed, for example, in the upper portion 140 of the upper container 100a.

An acid or aqueous solution thereof may be accommodated in the upper container 100a, and a base containing a salt of carbonic acid or aqueous solution thereof is accommodated in the lower container 100b in the above-described embodiment. Alternatively, a base containing a salt of carbonic acid or aqueous solution thereof may be accommodated in the upper container 100a, and an acid or aqueous solution thereof may be accommodated in the lower container 100b.

An acid and a base containing a salt of carbonic acid may be accommodated together in the lower container 100b, and water may be accommodated in the upper container 100a. A speed of supplying water from the upper container 100a to the lower container 100b may be adjusted using the speed control valve 120 to thereby control the speed of generation of carbon dioxide or stop generation of carbon dioxide.

In the integrated-type carbon dioxide generator according to the embodiment of the present invention, a raw material in an upper container may be introduced into a lower container by natural gravity, and as a speed control valve is included, the raw material may be dropped at a desired speed or the dropping may be stopped to thereby generate a desired amount of carbon dioxide (CO2) at a desired speed, in the lower portion, and also, generation of carbon dioxide (CO2) may be stopped.

According to the integrated-type carbon dioxide generator of the present invention, an excessive increase in pressure may be prevented.

The integrated-type carbon dioxide generator of the present invention is easy to use.

According to the integrated-type carbon dioxide generator of the present invention, when generation of carbon dioxide (CO2) by using an acid and a base containing a salt of carbonic acid is finished due to consumption of a provided amount of the acid and the base, the acid and the base may be refilled so as to repeatedly use the integrated-type carbon dioxide generator.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope of the inventive concept as defined by the following claims.

## Claims

1. An integrated-type carbon dioxide generator (100) comprising
an upper container (100a) accommodating an acid or aqueous solution thereof and including an carbon dioxide outlet pipe (130) through which carbon dioxide gas is discharged, wherein the upper container (100a) is communicatively connected to the outside through the carbon dioxide outlet pipe;
a lower container (100b) located under the upper container and accommodating a base containing a salt of carbonic acid or a aqueous solution thereof;
a dropping hole area (152) formed in a bottom surface of the upper container such that the acid or aqueous solution thereof is supplied from the upper container to the lower container by gravity;
a speed control valve (120) that is externally manipulable and configured to open and close the dropping hole area; and
a pressure equilibrium and gas passage pipe (150) configured to form a path through which carbon dioxide generated in the lower container is transferred to the upper container, wherein one end of a bottom surface of the pressure equilibrium and gas passage pipe (150) in a vertical direction is formed in an upper area of the lower container such that only carbon dioxide and gases are able to move through the pressure equilibrium and gas passage pipe, and another end of an upper surface of the pressure equilibrium and gas passage pipe is located in an upper area of the upper container so as to form a vertical-type passage in which the upper container and the lower container are connected to each other.

2. The integrated-type carbon dioxide generator of claim 1, further comprising an upper inlet part (110) formed on the upper container and configured to be openable and to input the acid or the aqueous solution thereof into the upper container.

3. The integrated-type carbon dioxide generator of claim 2, wherein a sealing material (p2) preventing gas leakage is interposed between an upper portion (140) of the upper container and the upper inlet part.

4. The integrated-type carbon dioxide generator of claim 2, wherein the outlet pipe is formed in the upper inlet part.

5. The integrated-type carbon dioxide generator of claim 1, wherein the speed control valve (120) includes a head portion (121), a body (122) extending from the head portion toward the bottom of the upper container, and a lower end tip (122e) via which the dropping hole area is opened or closed,
wherein a speed at which the acid or aqueous solution thereof is input to the lower container is adjusted or input of the acid or aqueous solution thereof is stopped by manipulating the speed control valve.

6. The integrated-type carbon dioxide generator of claim 5, wherein an external screw thread (141) is provided in a through hole which upwardly protrudes in an upper portion (140) of the upper container, and
werein a thread groove (121a), which mates with the external screw thread, is formed in an inner part of the head portion of the speed control valve to allow the speed control valve to be raised and lowered.

7. The integrated-type carbon dioxide generator of claim 6, wherein a sealing material (p1) preventing leakage of a gas is interposed between the body (122) and the upper portion (140) of the upper container.

8. The integrated-type carbon dioxide generator of claim 1, wherein the upper container and the lower container are separately coupled.

9. The integrated-type carbon dioxide generator of claim 8, wherein when the upper container is separated from the lower container, an upper portion of the lower container is opened.

10. The integrated-type carbon dioxide generator of claim 8, wherein a sealing material preventing gas leakage is interposed between the upper container and the lower container.

## Patentansprüche

1. Kohlendioxidgenerator des integrierten Typs (100), umfassend:
einen oberen Behälter (100a), der eine Säure oder eine wässrige Lösung davon enthält und ein Kohlendioxid-Auslassrohr (130) umfasst, durch das Kohlendioxidgas ausgetragen wird, wobei der obere Behälter (100a) über das Kohlendioxid-Auslassrohr kommunikativ mit der Außenseite verbunden ist;
einen unteren Behälter (100b), der sich unter dem oberen Behälter befindet und eine Base enthält, die ein Salz von Kohlensäure oder eine wässrige Lösung davon enthält;
einen Tropflochbereich (152), der so in einer Bodenfläche des oberen Behälters ausgebildet ist, dass die Säure oder ihre wässrige Lösung durch die Schwerkraft aus dem oberen Behälter dem unteren Behälter zugeführt wird;
ein Geschwindigkeitsregulierventil (120), das extern manipulierbar ist und so konfiguriert ist, dass es den Tropflochbereich öffnen und schließen kann; und
ein Druckgleichgewichts- und Gasleitungsrohr (150), das so konfiguriert ist, dass es einen Weg bildet, über den im unteren Behälter erzeugtes Kohlendioxid in den oberen Behälter übergeführt wird, wobei ein Ende einer Bodenfläche des Druckgleichgewichts- und Gasleitungsrohrs (150) in einer vertikalen Richtung in einem oberen Bereich des unteren Behälters so ausgebildet ist, dass sich nur Kohlendioxid und Gase durch das Druckgleichgewichts- und Gasleitungsrohr bewegen können, und sich ein anderes Ende einer oberen Fläche des Druckgleichgewichts- und Gasleitungsrohrs in einem oberen Bereich des oberen Behälters befindet, so dass ein Durchgang des vertikalen Typs entsteht, wobei der obere Behälter und der untere Behälter miteinander verbunden sind.

2. Kohlendioxidgenerator des integrierten Typs gemäß Anspruch 1, weiterhin umfassend einen oberen Einlassteil (110), der auf dem oberen Behälter ausgebildet ist und so konfiguriert ist, dass er geöffnet werden und die Säure oder ihre wässrige Lösung in den oberen Behälter einleiten kann.

3. Kohlendioxidgenerator des integrierten Typs gemäß Anspruch 2, wobei sich ein Dichtungsmaterial (p2), das einen Gasaustritt verhindert, zwischen einem oberen Teil (140) des oberen Behälters und dem oberen Einlassteil befindet.

4. Kohlendioxidgenerator des integrierten Typs gemäß Anspruch 2, wobei das Auslassrohr im oberen Einlassteil ausgebildet ist.

5. Kohlendioxidgenerator des integrierten Typs gemäß Anspruch 1, wobei das Geschwindigkeitsregulierventil (120) einen Kopfteil (121), einen Korpus (122), der sich vom Kopfteil aus zum Boden des oberen Behälters erstreckt, und eine Spitze am unteren Ende (122e), über die der Tropflochbereich geöffnet oder geschlossen wird, umfasst,
wobei die Geschwindigkeit, mit der die Säure oder ihre wässrige Lösung in den unteren Behälter eingeleitet wird, eingestellt wird oder die Einleitung der Säure oder ihrer wässrigen Lösung gestoppt wird, indem man das Geschwindigkeitsregulierventil manipuliert.

6. Kohlendioxidgenerator des integrierten Typs gemäß Anspruch 5, wobei in einem durchgehenden Loch ein äußeres Schraubengewinde (141) bereitgestellt wird, das aufwärts in einen oberen Teil (140) des oberen Behälters hineinragt, und
wobei in einem inneren Teil des Kopfteils des Geschwindigkeitsregulierventils eine Gewindenut (121a) entsteht, die zu dem äußeren Schraubengewinde passt, damit das Geschwindigkeitsregulierventil angehoben und abgesenkt werden kann.

7. Kohlendioxidgenerator des integrierten Typs gemäß Anspruch 6, wobei sich ein Dichtungsmaterial (p1), das das Austreten von Gas verhindert, zwischen dem Korpus (122) und dem oberen Teil (140) des oberen Behälters befindet.

8. Kohlendioxidgenerator des integrierten Typs gemäß Anspruch 1, wobei der obere Behälter und der untere Behälter separat gekoppelt sind.

9. Kohlendioxidgenerator des integrierten Typs gemäß Anspruch 8, wobei dann, wenn der obere Behälter von dem unteren Behälter getrennt ist, ein oberer Teil des unteren Behälters geöffnet ist.

10. Kohlendioxidgenerator des integrierten Typs gemäß Anspruch 8, wobei sich ein Dichtungsmaterial, das das Austreten von Gas verhindert, zwischen dem oberen Behälter und dem unteren Behälter befindet.

## Revendications

1. Générateur de dioxyde de carbone de type intégré (100) comprenant
un récipient supérieur (100a) recevant un acide ou une solution aqueuse de celui-ci et incluant un conduit de sortie de dioxyde de carbone (130) par lequel du dioxyde de carbone gazeux est évacué, dans lequel le récipient supérieur (100a) est relié de manière communicante à l'extérieur par le conduit de sortie de dioxyde de carbone ;
un récipient inférieur (100b) situé sous le récipient supérieur et recevant une base contenant un sel d'acide carbonique ou une solution aqueuse de celui-ci ;
une zone de trou de chute (152) formée dans une surface de fond du récipient supérieur de telle sorte que l'acide ou une solution aqueuse de celui-ci est acheminé du récipient supérieur au récipient inférieur par gravité ;
une vanne de régulation de vitesse (120) qui est manipulable de l'extérieur et configurée pour ouvrir et fermer la zone de trou de chute ; et
un conduit d'équilibre de pression et de passage de gaz (150) configuré pour former un chemin à travers lequel du dioxyde de carbone généré dans le récipient inférieur est transféré vers le récipient supérieur, dans lequel une extrémité d'une surface de fond du conduit d'équilibre de pression et de passage de gaz (150) dans une direction verticale est formée dans une zone supérieure du récipient inférieur de telle sorte que seuls du dioxyde de carbone et des gaz sont capables de se déplacer à travers le conduit d'équilibre de pression et de passage de gaz, et une autre extrémité d'une surface supérieure du conduit d'équilibre de pression et de passage de gaz est située dans une zone supérieure du récipient supérieur de façon à former un passage de type vertical dans lequel le récipient supérieur et le récipient inférieur sont reliés l'un à l'autre.

2. Générateur de dioxyde de carbone de type intégré selon la revendication 1, comprenant en outre une partie d'entrée supérieure (110) formée sur le récipient supérieur et configurée pour être ouverte et pour introduire l'acide ou sa solution aqueuse dans le récipient supérieur.

3. Générateur de dioxyde de carbone de type intégré selon la revendication 2, dans lequel un matériau d'étanchéité (p2) empêchant une fuite de gaz est interposé entre une portion supérieure (140) du récipient supérieur et la partie d'entrée supérieure.

4. Générateur de dioxyde de carbone de type intégré selon la revendication 2, dans lequel le conduit de sortie est formé dans la partie d'entrée supérieure.

5. Générateur de dioxyde de carbone de type intégré selon la revendication 1, dans lequel la vanne de régulation de vitesse (120) inclut une portion de tête (121), un corps (122) s'étendant de la portion de tête vers le fond du récipient supérieur, et un embout d'extrémité inférieure (122e) par lequel la zone de trou de chute est ouverte ou fermée,
dans lequel une vitesse à laquelle l'acide ou une solution aqueuse de celui-ci est introduit dans le récipient inférieur est ajustée ou l'introduction de l'acide ou d'une solution aqueuse de celui-ci est arrêtée en manipulant la vanne de régulation de vitesse.

6. Générateur de dioxyde de carbone de type intégré selon la revendication 5, dans lequel un filetage externe (141) est prévu dans un trou traversant qui fait saillie vers le haut dans une portion supérieure (140) du récipient supérieur, et
dans lequel une rainure de filetage (121a), qui s'accouple avec le filetage externe, est formée dans une partie intérieure de la portion de tête de la vanne de régulation de vitesse pour permettre à la vanne de régulation de vitesse d'être soulevée et abaissée.

7. Générateur de dioxyde de carbone de type intégré selon la revendication 6, dans lequel un matériau d'étanchéité (p1) empêchant la fuite d'un gaz est interposé entre le corps (122) et la portion supérieure (140) du récipient supérieur.

8. Générateur de dioxyde de carbone de type intégré selon la revendication 1, dans lequel le récipient supérieur et le récipient inférieur sont couplés séparément.

9. Générateur de dioxyde de carbone de type intégré selon la revendication 8, dans lequel, lorsque le récipient supérieur est séparé du récipient inférieur, une portion supérieure du récipient inférieur est ouverte.

10. Générateur de dioxyde de carbone de type intégré selon la revendication 8, dans lequel un matériau d'étanchéité empêchant une fuite de gaz est interposé entre le récipient supérieur et le récipient inférieur.
